# EUROPEAN PATENT APPLICATION

(11) **EP 2 205 014 A2**
(43) Date of publication of application: **07.07.2010**
(21) Application number: 09015572.2
(22) Date of filing: 16.12.2009
(51) Int. Cl.: H04W 12/04, H04W 36/14

(54) **Method of handling inter-system handover security in wireless communications system and related communication device**

(30) Priority: 05.01.2009 US 142382 P; 08.12.2009 US 632809
(71) Applicant: HTC Corporation, Taoyuan City Taoyuan County (TW)
(72) Inventor: Wu, Chih-Hsiang, Taoyuan City Taoyuan County (TW)
(74) Representative: Görz, Ingo

(57) **Abstract**

A method of handling inter-system handover security for a communication device (20) in a wireless communication system (10) includes creating a first security key set for security with a serving network (410), creating a second security key set with a deactivating state (420), receiving an inter-system handover command for an inter-system handover from the serving network to a target network (430), selecting either the first security key set or the second security key set during the inter-system handover (440), and using the selected security key set for security with the target network (450), wherein the selected security key set is identical with a third security key set that is used by the target network for security with the communication device (20).

## Description

The present invention relates to a method of handling security associated with an inter-system handover in a wireless communication system and communication device thereof according to the pre-characterizing clauses of claims 1, 6, 9, and 14.

In a mobile communication system, information security technologies are employed to protect signalling and user plane messages from eavesdropping and malicious modification. In an UMTS (Universal Mobile Telecommunications System) system or an EPS (Evolved Packet Subsystem) system including a long term evolution (LTE) radio access system and a EPC (Evolved Packet Core) system, the information security is typically achieved by using encryption and integrity protection mechanisms, which rely on various keys, counters, etc. A user equipment (UE) maintains security context, including security keys, ciphering/integrity protection algorithms, key derivation functions, etc, for realizing UP (User Plane), NAS (Non Access Stratum) and AS (Access Stratum) protection.

An authentication and key agreement (AKA) procedure is used over a UTRAN or an E-UTRAN for creating new security keys. The AKA procedure over the UTRAN, or a UMTS AKA procedure, mainly creates new ciphering and integrity keys (CK, IK), whereas the AKA procedure over the E-UTRAN, or a EPS AKA procedure, mainly creates a new intermediate key shared between the UE and a MME (Mobility Management Entity).

In either abovementioned AKA procedure, the UE may not immediately activate the new key to use when having had in-use keys. That is, the UE has two security key sets before the new security key set is put into use. The existence of two key sets causes problem of activating security associated with an inter-RAT (Radio Access Technology) handover, or an inter-system handover.

In an inter-RAT handover from UTRA to E-UTRA, an intermediate key K'_{ASME} has to be derived from a CK and an IK, used in the UTRAN, with the help of an one-way key derivation function, and then the intermediate key K'_{ASME} is used to derive ciphering and integrity keys for use in the E-UTRAN. Assume that a UE has two security key sets of (CK, IK) for a domain when the UE is in RRC connected mode in the UTRAN. One is being used for ciphering and integrity protection and the other is derived from the latest UMTS AKA procedure but has not been used (deactivated). When the UE is requested to perform the inter-RAT handover to an eNode-B in the E-UTRAN, the prior art does not specify which of the (CK, IK) key sets shall be used by the UE to derive the intermediate key K'_{ASME} for the handover. Thus, the UE has chances to select the (CK, IK) key set different from the one used by a MME (a target network terminal). If the UE and MME use different security key sets for derivation of the intermediate key K'_{ASME}, the UE and eNode-B will use different ciphering and integrity keys for ciphering and integrity protection. The communication between the UE and eNode B will fail after the handover to E-UTRA.

In an inter-RAT handover from E-UTRA to UTRA, a ciphering key CK' and an integrity key IK' have to be derived from an intermediate key K_{ASME}. A UE has two intermediate keys K_{ASME} when the UE in RRC connected mode in the E-UTRAN. One is being used for ciphering and integrity protection and the other is derived from the latest EPS AKA procedure but has not been used. In this situation, the UE is requested to perform the inter-RAT handover from E-UTRAN to UTRA. However, the prior art does not specify which of the intermediate keys shall be used by the UE to derive the ciphering key CK' and the integrity key IK' for the handover? If the UE and MME use different intermediate keys K_{ASME} to derive the CK' and IK', the UE and UTRAN will use different ciphering and integrity keys. The communication between the UE and UTRAN will fail after handover to UTRA.

This in mind, the present invention aims at providing methods for handling security associated with an inter-system handover in a wireless communication system and related communication device, so as to avoid the connection failure caused by different security key sets between the UE and the network.

This is achieved by methods of handling security associated with an inter-system handover in a wireless communication system and related communication device according to claims 1, 6, 9 and 14. The dependent claims pertain to corresponding further developments and improvements.

As will be seen more clearly from the detailed description following below, the claimed method of handling inter-system handover security for a communication device in a wireless communication system includes creating a first security key set for security with a serving network, creating a second security key set with a deactivating state, receiving an inter-system handover command requesting the communication device to perform an inter-system handover from the serving network to a target network, selecting either the first security key set or the second security key set during the inter-system handover, wherein the selected security key set is identical with a third security key set that is used by the target network for security with the communication device, and using the selected security key set for security with the target network.

In the following, the invention is further illustrated by way of example, taking reference to the accompanying drawings. Thereof
Fig. 1 is a schematic diagram of a wireless communication system.
Fig. 2 is a schematic diagram of a communication device according to an example of the present invention.
Fig. 3 is a schematic diagram of the program code of Fig. 2.
Fig. 4 is a flowchart of a process according to a first example of the present invention.
Fig. 5 is a flowchart of a process according to a second example of the present invention.

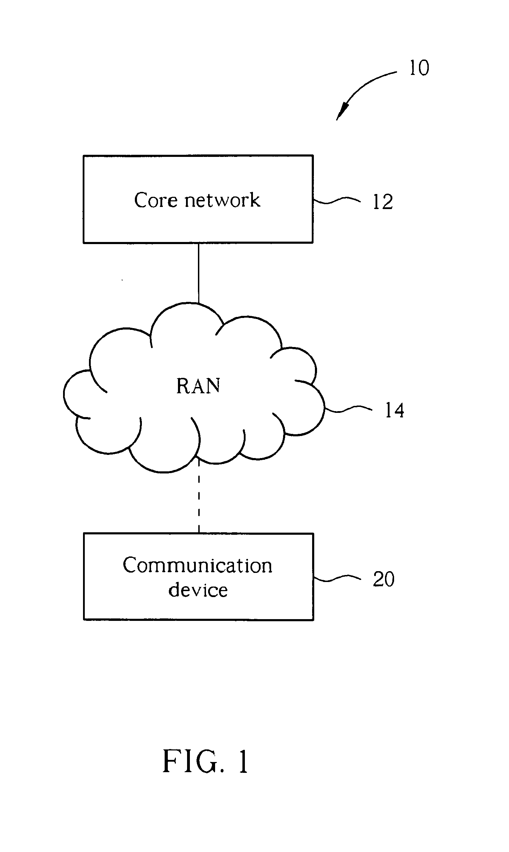

Please refer to Fig. 1, which illustrates a schematic diagram of a wireless communication system 10. Briefly, the wireless communication system 10 includes a core network 12, a radio access network (RAN) 14, and a communication device 20. The RAN 14 can be a second generation (2G) network, e.g. a GERAN (GSM/EDEG Radio Access Network), a third generation (3G) network, e.g. UTRAN (UMTS Radio Access Network), or an evolved 3G network, e.g. EUTRAN (Evovled UTRAN) and a plurality of base stations, such as Node-Bs or evolved Node-B (eNBs). Depended on different systems, the core network 12 has different structure, such as a Serving GPRS Support Node (SGSN) of the 3G system or a MME (Mobility Management Entity) of the evolved 3G system. The communication device 20, such as a mobile phone or a PDA (Personal Digital Assistant), can be referred as a user equipment (UE) or a mobile station (MS), and support multi-radio-access technologies (RATs) including the GSM/UMTS/LTE technologies.

The communication device 20 can perform an inter-system handover from the RAN 14 to enter another RAN. In the inter-system handover, the RAN 14 is seen as a serving network, whereas the RAN which the communication device 20 attempts to enter is seen as a target network. Security between the communication device 20 and the RAN 14, the target network, or the core network 12 relies on various security algorithms and a security key set including different levels of keys, such as a base-station-level key and a mobility-management-level key. Same security key set and same algorithms shall be used in both sides to ensure security success. If different keys are used in both sides, the security function is failed. In addition, the mobile device, the core network 12, and the RAN 14 can jointly perform a key renewing procedure, such as an AKA (Authentication and Key Agreement) procedure, so as to generate an entirely new key set.

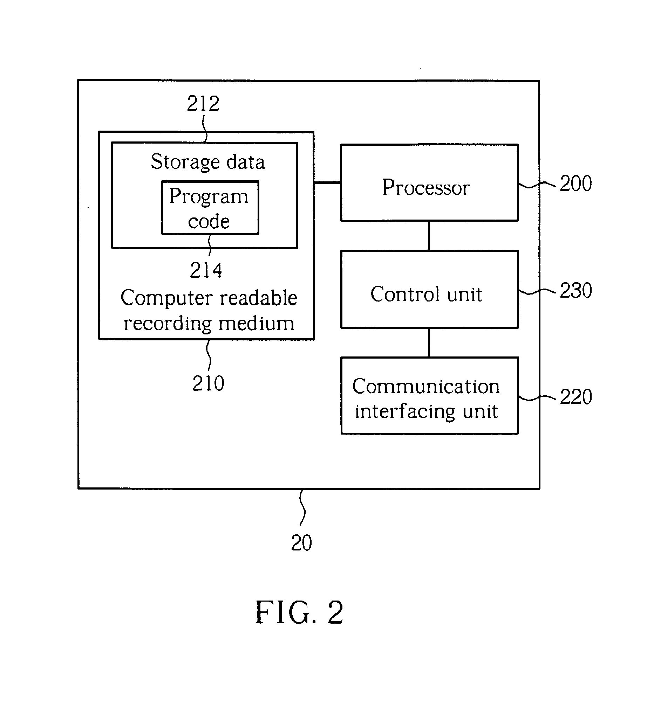

Please refer to Fig. 2, which illustrates a schematic diagram of a communication device 20 according to an example of the present invention. The communication device 20 includes a processor 200, a computer readable recording medium 210, a communication interfacing unit 220 and a control unit 230. The computer readable recording medium 210 is any data storage device that includes program code 214, thereafter read and processed by the processor 200. The computer readable recording medium 210 can include any of a subscriber identity module (SIM), a universal subscriber identity module (USIM), read-only memory (ROM), random-access memory (RAM), CD-ROMs, magnetic tapes, hard disks, optical data storage devices, and carrier waves (such as data transmission through the Internet). The control unit 230 controls the communication interfacing unit 220 and related operations and states of the communication device 20 according to processing results of the processor 200. The communication interfacing unit 220 is preferably a radio transceiver and accordingly exchanges wireless signals with the network.

Preferably, the communication device 20 supports the LTE and UMTS systems. Security key sets of the communication device 20 include:
a security key set for the LTE system (EUTRAN), including an intermediate key K_{ASME} (a mobile-management-level key used between the UE and the MME), a key K_{eNB} (a base-station-level key used between the UE and a eNB), and a K_{RRCint} (a radio resource control integrity protection key), a K_{RRCenc} (a radio resource control encryption key), and a K_{UPenc} (a user plane encryption key); and
a security key set for the UMTS (UTRAN) system, including a CK (Ciphering Key) and an IK (Integrity Key), corresponding to a packet switched (PS) or circuited switched (CS) domain.

The abovementioned security key sets, if existing, can be stored in the computer readable recording medium 210 and read and processed by the processor 200 via the program code 214.

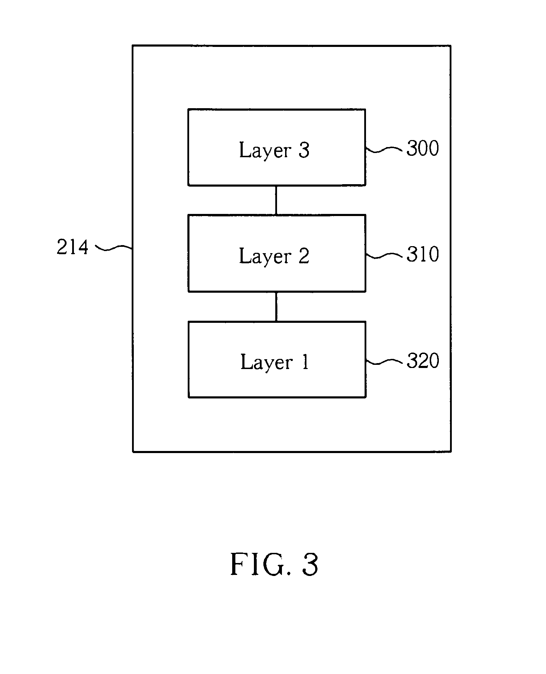

Please refer to Fig. 3, which illustrates a schematic diagram of the program code 214 according to an example of the present invention. The program code 214 includes program code of multiple communications protocol layers, which from top to bottom are a layer 3 300, a layer 2 310, and a layer 1 320. The layer 3 300 is responsible for configuring the security keys according to information elements (IEs) and radio resource control (RRC) messages (or RR (Radio Resource) messages) received from the network. Various procedures are managed by the layer 3 300, such as an inter-system handover and a RRC reestablishment procedure. The Layer 2 310 includes a radio control link (RLC) layer and a media access control (MAC) layer for the UMTS system, and includes a PDCP (Packet Data Convergence Protocol), an RLC, and a MAC layer for the LTE system. The Layer 1 218 is physical layer. Functions of the Layers 2 and 3 are well known in the art, and thus operating description is omitted herein.

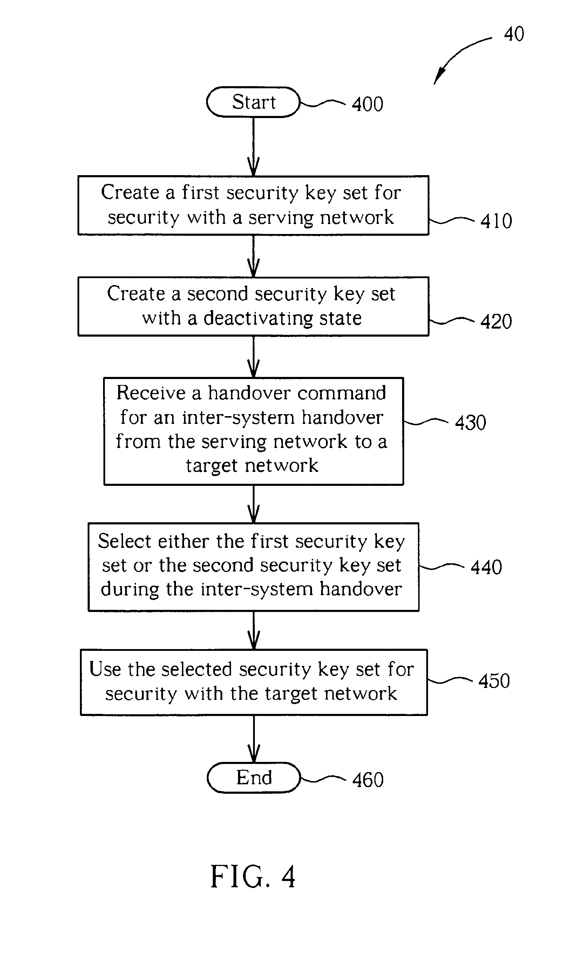

Please refer to Fig. 4, which illustrates a flowchart of a process 40 according to a first example of the present invention. The process 40 is utilized in a UE for handling inter-system handover security. The process 40 can be compiled into the program code 214 and includes the following steps:
Step 400: Start.
Step 410: Create a first security key set for security with a serving network.
Step 420: Create a second security key set with a deactivating state.
Step 430: Receive a handover command for an inter-system handover from the serving network to a target network.
Step 440: Select either the first security key set or the second security key set during the inter-system handover.
Step 450: Use the selected security key set for security with the target network.
Step 460: End.

According to the process 40, the UE that has created the first security key set and the second security key set with the deactivating state receives the handover command from the serving network for performing the inter-system handover. The second security key set with the deactivating state means that the security key set is created and has not been used, and can be generated via the key renewing procedure. In this situation, the UE selects one security key set from the first and second security key sets during the inter-system handover. The selected security key set must be identical with a security key set that is used by the target network for security with the UE. At last the UE uses the selected security key set for the security with the target network, e.g. the UE generates the required keys the target network based on the selected security key set. Therefore, through the process 40, the UE and the target network performs security based on the same security key base to prevent connection failure during/after the inter-system handover.

In the process 40, the security key set used by the target network is transferred from the serving network to the target network during the inter-system handover. On the other hand, the handover command can be used to indicate the security key set used by the target network so that the UE knows which security key set shall be selected.

Take an example associated with the inter-system handover from a UTRAN to an E-UTRAN based on the concept of the process 40. A UE has two security key sets, each including (CK, IK) for a domain (PS or CS domain), when staying in an RRC connected mode (e.g. a CELL_DCH or CELL_FACH state) in the UTRAN. The UE uses one of the security key sets for ciphering and integrity protection with the UTRAN. The other security key set is derived from the latest UMTS AKA procedure but has not been activated. After this, the UE receives a handover command and is requested to perform the inter-system handover to the E-UTRAN. During the handover, a SGSN receives the (CK, IK) being used in UTRAN from the UTRAN and then sends the (CK, IK) to a MME. in addition, the handover command may include a keyChangelndicator IE indicating the (CK, IK) being used in UTRAN or any other usable IE indicating the (CK, IK) being used in UTRAN. Or, the handover command may directly include the (CK, IK) being used in UTRAN. According to the handover command, the UE selects and uses the (CK, IK) being used in the UTRAN for ciphering and integrity protection with the E-UTRAN. In this situation, the UE and a MME both use the (CK, IK) being used in UTRAN to derive an intermediate key K'_{ASME}. Then the UE derives a key K_{eNB} (a base-station-level key) from the intermediate key K'_{ASME} and uses the K_{eNB} to derive ciphering and integrity keys (e.g. the K_{RRCint}, K_{RRCenc}, and K_{UPenc} keys) that will be used in security with the E-UTRAN.

Take another example associated with the inter-system handover from a UTRAN to an E-UTRAN. A UE has the same security key sets as the UE of the abovementioned example when staying in the RRC connected mode in UTRAN. The abovementioned latest UMTS AKA procedure can be triggered by a SGSN and thereby obtains the (CK, IK) that has not been activated by the UE. After this, the UE receives a handover command and is requested to perform the inter-system handover to the E-UTRAN. During the handover, the SGSN sends the (CK, IK) derived from the latest UMTS AKA procedure to a MME. The handover command may include a keychangelndicator IE indicating the (CK, IK) derived from the latest UMTS AKA procedure or any other usable IE indicating the (CK, IK) derived from the latest UMTS AKA procedure. Or, the handover command may directly include the (CK, IK) derived from the latest UMTS AKA procedure. Then, the UE selects the indicated (CK, IK). As a result, the UE and MME use the (CK, IK) derived from the latest UMTS AKA procedure to derive an intermediate key K'_{ASME}. Then the UE derives a key K_{eNB} from the intermediate key K'_{ASME} and uses the K_{eNB} to derive ciphering and integrity keys that will be used for security with the E-UTRAN.

Take an example associated with an inter-system handover from an E-UTRAN to a UTRAN based on the concept of the process 40. A UE has two security key sets, each including an intermediate key K_{ASME}, when staying in an RRC connected mode in the E-UTRAN. One intermediate key K_{ASME} is in-use for ciphering and integrity protection, and the other is derived from the latest EPS AKA procedure but has not been used. The UE receives a handover command indicating the in-use intermediate key K_{ASME} and is requested to perform the inter-system handover to UTRAN. According to the handover command, the UE selects the in-use intermediate key K_{ASME}. As a result, the UE and MME both use the intermediate key K_{ASME} being used for ciphering and integrity protection to derive ciphering and integrity keys (CK', IK') that will be used for security with the UTRAN.

Alternatively, the E-UTRAN in the abovementioned example can generate a handover command indicating the intermediate key K_{ASME} derived from the latest EPS AKA procedure instead of the in-use intermediate key K_{ASME}. In this situation, the UE and MME both use the intermediate key K_{ASME} derived from the latest EPS AKA procedure for ciphering and integrity protection to derive the ciphering and integrity keys (CK', IK').

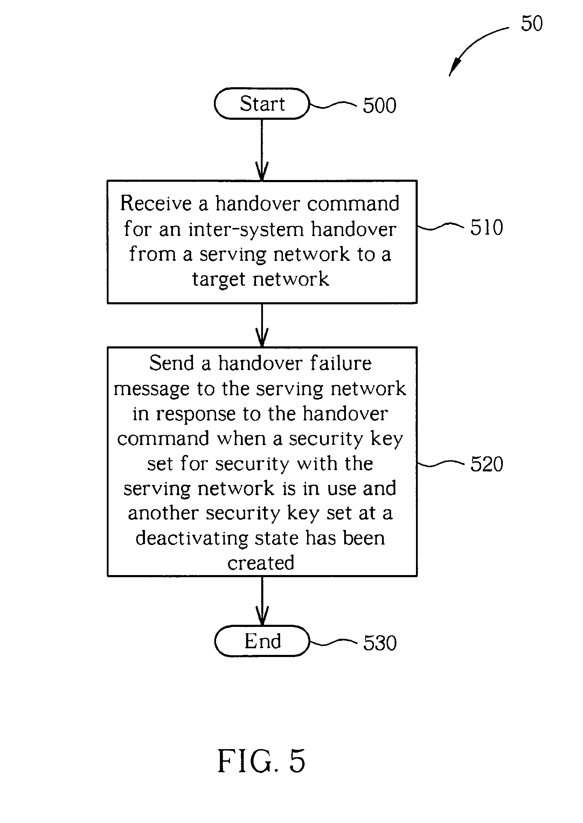

Please refer to Fig. 5, which illustrates a flowchart of a process 50 according to a second example of the present invention. The process 50 is utilized in a UE for handling inter-system handover security, providing a different solution from the process 40. The process 50 can be compiled into the program code 214 and includes the following steps:
Step 500: Start.
Step 510: Receive a handover command for an inter-system handover from a serving network to a target network.
Step 520: Send a handover failure message to the serving network in response to the handover command when a security key set for security with the serving network is in use and another security key set at a deactivating state has been created.
Step 530: End.

According to the process 50, the UE receives the handover command and then sends the handover failure message to the serving network when having two security key sets, one in-use for security with the serving network and the other in the deactivating state. Furthermore, the handover failure message can indicate that the handover failure cause is security activation failure. This avoids the UE and the target network from using different key base, especially when the handover command does not indicate any security key set used by the target network. As a result, security failure after the inter-system handover can be avoided.

Take an example associated with the inter-system handover from a UTRAN to an E-UTRAN based on the concept of the process 50. A UE has two security key sets, each including a (CK, IK) for a domain (PS or CS domain), when the UE in an RRC connected mode in the UTRAN. One (CK, IK) is being used for ciphering and integrity protection and the other is derived from the latest UMTS AKA procedure but has not been used. The UE receives a handover command and is requested to perform the inter-system handover to the E-UTRAN. According to the process 50, the UE determines that the inter-system handover is failed and sends a failure message to the UTRAN. Therefore, the UE does not perform the handover when having two (CK, IK) sets for one domain, thereby avoiding a different key base from the E-UTRAN/MME.

Take an example associated with the inter-system handover from an E-UTRAN to a UTRAN based on the concept of the process 50. A UE has two security key sets, each including an intermediate key K_{ASME}, when staying in an RRC connected mode in the E-UTRAN. One is being used for ciphering and integrity protection and the other is derived from the latest EPS AKA procedure but has not been used. The UE receives a handover command and is requested to perform the inter-system handover to the UTRAN. The UE determines that the inter-system handover is failed and then sends a failure message to the E-UTRAN. Therefore, the UE does not perform the handover when having two intermediate key K_{ASME} keys in the E-UTRAN, thereby avoiding a different key base from the UTRAN/SGSN.

In conclusion, the examples of the present invention avoid the connection failure resulting from difference of used security key sets between the UE and the target network.

## Claims

1. A method of handling inter-system handover security for a communication device (20) in a wireless communication system (10),
**characterized by:**
creating a first security key set for security with a serving network (410); creating a second security key set with a deactivating state (420); receiving an inter-system handover command that requests the communication device (20) to perform an inter-system handover from the serving network to a target network (430);
selecting either the first security key set or the second security key set during the inter-system handover (440), wherein the selected security key set is identical with a third security key set that is used by the target network for security with the communication device (20); and
using the selected security key set for security with the target network (450).

2. The method of claim 1, **characterized in that** the inter-system handover command indicates the third security key set.

3. The method of claim 1 or 2, **characterized in that** using the selected security key set for security with the target network comprises:
deriving an intermediate key from a first ciphering key of the selected security key set and a first integrity key of the selected security key set;
deriving a base-station-level key from the intermediate key; and
deriving a second ciphering key and a second integrity key for the security with the target network from the base-station-level key.

4. The method of claim 1 or 2, **characterized in that** using the selected security key set for security with the target network comprises:
deriving a base-station-level key from an intermediate key of the selected security key set; and
deriving a ciphering key and a integrity key for the security with the target network from the base-station-level key.

5. The method of any one of claims 1 to 4, **characterized in that** the third security key set is transferred from the serving network to the target network during the inter-system handover, and the first security key set and the second security key set belong to the same service domain.

6. A method of handling inter-system handover security for a communication device (20) in a wireless communication system (10),
**characterized by:**
receiving an inter-system handover command that requests the communication device (20) to perform a handover from a serving network to a target network (510); and
sending a handover failure message to the serving network in response to the inter-system handover command when a first security key set for security with the serving network is in use and a second security key set with a deactivating state has been created (520).

7. The method of claim 6, **characterized in that** the second security key set with the deactivating state is created via an authentication and key agreement procedure initiated by the serving network, and the first security key set and the second security key set belong to the same service domain.

8. The method of claim 6 or 7, **characterized in that** the first security key set and the second security key set includes at least one of a ciphering key, an integrity key and an intermediate key respectively.

9. A communication device (20) of a wireless communication system (10) for explicitly handling inter-system handover security, **characterized by:**
means for creating a first security key set for security with a serving network (410);
means for creating a second security key set with a deactivating state (420);
means for receiving an inter-system handover command for an inter-system handover from the serving network to a target network (430);
means for selecting either the first security key set or the second security key set during the inter-system handover (440), wherein the selected security key set is identical with a third security key set that is used by the target network for security with the communication device; and
means for using the selected security key set for security with the target network (450).

10. The communication device (20) of claim 9, **characterized in that** the inter-system handover command indicates the third security key set.

11. The communication device (20) of claim 9 or 10, **characterized in that** using the selected security key set for security with the target network comprises:
means for deriving an intermediate key from a first ciphering key of the selected security key set and a first integrity key of the selected security key set;
means for deriving a base-station-level key from the intermediate key; and
means for deriving a second ciphering key and a second integrity key for the security with the target network from the base-station-level key.

12. The communication device (20) of claim 9 or 10, **characterized in that** using the selected security key set for security with the target network comprises:
means for deriving a base-station-level key from an intermediate key of the selected security key set; and
means for deriving a ciphering key and a integrity key for the security with the target network from the base-station-level key.

13. The communication device (20) of any one of claims 9 to 12, **characterized in that** the third security key set is transferred from the serving network to the target network during the inter-system handover, and the first security key set and the second security key set belong to the same service domain.

14. A communication device (20) of a wireless communication system (10) for explicitly handling inter-system handover security, **characterized by:**
means for receiving an inter-system handover command for an inter-system handover from a serving network to a target network (510); and
means for sending a handover failure message to the serving network in response to the inter-system handover command when a first security key set for security with the serving network is in use and a second security key set with a deactivating state has been created (520).

15. The communication device (20) of claim 14, **characterized in that** the second security key set with the deactivating state is created via from an authentication and key agreement procedure initiated by the serving network, and the first security key set and the second security key set belong to the same service domain, and/or
**characterized in that** the first security key set and the second security key set includes at least one of a ciphering key, an integrity key and an intermediate key respectively.
